# EUROPEAN PATENT SPECIFICATION

(11) **EP 3 536 723 B1**
(45) Date of publication and mention of the grant of the patent: **25.01.2023**
(21) Application number: 17866778.8
(22) Date of filing: 31.10.2017
(51) Int. Cl.: C08F 257/02, C08K 3/04, C08L 9/00, C08L 51/00, C08F 279/02, C08L 3/04, C08F 290/04

(54) **COPOLYMER RUBBER AND METHOD FOR PRODUCING SAME, AND CROSSLINKED RUBBER COMPOSITION**
COPOLYMERKAUTSCHUK UND VERFAHREN ZUR HERSTELLUNG DAVON SOWIE VERNETZTE KAUTSCHUKZUSAMMENSETZUNG
CAOUTCHOUC COPOLYMÈRE ET PROCÉDÉ POUR SA PRODUCTION ET COMPOSITION DE CAOUTCHOUC RÉTICULÉ

(30) Priority: 01.11.2016 JP 2016214717
(43) Date of publication of application: 11.09.2019
(73) Proprietor: NIPPON STEEL Chemical & Material Co., Ltd., Tokyo 103-0027 (JP)
(72) Inventor: KURATOMI, Tadashi, Tokyo 101-0021 (JP); KAWABE, Masanao, Tokyo 101-0021 (JP)
(74) Representative: Vossius & Partner Patentanwälte Rechtsanwälte mbB
(86) International application number: PCT/JP2017/039254
(87) International publication number: WO 2018/084128

(56) References cited:
- WO-A1-2016/104748
- JP-A- 2004 123 873
- JP-A- 2009 544 824
- JP-A- 2010 511 071
- JP-A- 2013 100 433
- US-A- 3 661 873
- US-A1- 2006 177 666
- DATABASE WPI Week 201335 Thomson Scientific, London, GB; AN 2013-H35684 XP002798347, & WO 2013/069077 A1 (NIPPON STEEL & SUMIKIN CHEM CO LTD) 16 May 2013 (2013-05-16)

## Description

### [Technical Field]

This invention relates to a copolymer rubber excellent in processability as well as tensile strength and abrasion resistance, and to a crosslinked rubber product produced by crosslinking the copolymer rubber.

### [Background Art]

Conjugated diene rubbers such as SBR (styrene-butadiene rubber), BR (butadiene rubber), and IR (isoprene rubber) styrene-isoprene rubbers are excellent in abrasion resistance, elasticity, and water resistance and used in various applications such as molding materials and modifiers for resins.

One example of the main applications of the conjugated diene rubbers is the use in tires for automobiles. Examples of required properties of the tires include mechanical strength, abrasion resistance, and wet grip (hereinafter, collectively referred to as strengths, etc.). Further, development of tires with excellent energy saving property, that is, low fuel consumption property (so-called "Eco tires") has been more actively carried out in recent years. Such Eco tires should have a low rolling resistance in addition to the strengths.

Addition of a filler (a reinforcing filler) such as carbon black, silica, or the like in the conjugated diene rubber for securing the strengths, etc. of tires has been known. As a raw material for further improving the strengths of tires while giving an excellent rolling resistance, terminal-modified solution-polymerized SBR (terminal-modified S-SBR) has drawn attention. Terminal-modified S-SBR has a functional group at a terminal of the SBR molecule, and the functional group at the terminal interacts with the filler. The interaction improves dispersibility of the filler in SBR and binds the terminal of SBR molecule, leading to reduction of the mobility of the SBR molecule. As a result, hysteresis loss (internal abrasion) in tires is reduced, thereby lowering the rolling resistance. By utilizing the features, the development of Eco tires having sufficient strengths as well as low rolling resistances has been progressed.

For example, in PTL 1, an organic lithium compound is used as an initiator in a non-polar solvent for living anion polymerization to synthesize a block copolymer including α-methyl styrene blocks and butadiene blocks, and if necessary, further the block copolymer is reacted with a multifunctional coupling agent, thereby obtaining S-SBR having high temperature characteristics as well as rubbery properties.

PTL 2 discloses star-shaped block inter polymer having random copolymer blocks of a conjugated diene and a monovinyl aromatic monomer, poly(conjugated diene) blocks, and functional groups derived from a multifunctional lithium initiator, and discloses that this star-shaped block inter polymer can be widely used as rubbers for producing tire treads having such excellent properties as low rolling resistance, and improved traction property.

The technologies disclosed in PTL 1 and 2 are considered to be effective for ensuring rubber processability by introducing branch structures in the rubber components. However, PTL 1 and 2 do not provide any particular idea for interaction with a filler for ensuring the strengths, and therefore do not make sufficient contributions to the strengths.

Moreover, PTL 3 discloses a rubber composition in which a rubber composition obtained by mixing a blend rubber, which contains a plurality of diene-type rubbers, and a certain amount of carbon black with a low-molecular-weight functional group-containing polymer having, at a molecular terminal, a functional group interactive with the carbon black and having a polymer structure similar to rubber components of the diene-type rubbers. This rubber composition can control the amount of the carbon black distributed in each of the diene-type rubber components by mixing a lower-molecular-weight compound interactive with the carbon black in a rubber. This effectively allows each rubber component to exhibit their characteristics, thereby balancing rubber characteristics in a trade-off relationship such as rolling characteristics and wet characteristics . However, this technique is not sufficient in contribution to the strengths because the lower molecular weight compound is mixed in a rubber.

Moreover, PTL 4 discloses a rubber composition including crosslinked rubber particles having conjugated diene monomer units, aromatic vinyl monomer units, and monomer units having at least two polymerizable unsaturated group, and a conjugated diene/aromatic vinyl copolymer rubber including a conjugated diene monomer units having a certain bonding structure. PTL 4 also discloses that the crosslinked rubber particles may have monomer units having a carboxylic acid group, a hydroxyl group and/or an epoxy group. Because the rubber composition is adequately interactive with inorganic fillers (fillers) such as silica, this technique is excellent in dispersibility of such inorganic fillers and processability. However, the monomer units having at least two polymerizable unsaturated group, and the monomer units having a carboxylic acid group, a hydroxyl group, and/or an epoxy group are both low-molecular-weight compounds. Therefore, the rubber composition is excessively highly reactive such that gelation would proceed in the crosslinked rubber particles and the rubber composition. Furthermore, this technique requires that the crosslinked rubber be synthesized separately from the conjugated diene/aromatic vinyl copolymer rubber, before the crosslinked rubber be mixed with the conjugated diene/aromatic vinyl copolymer rubber. Therefore, this technique should be improved in terms of process simplicity.

PTL 5 discloses a soluble multifunctional vinyl aromatic copolymer, but does not teach use of this copolymer for producing a copolymer rubber.

PTL 6 discloses a specific polymer particle and method of preparing the same.

PTL 7 relates to a specific soluble, multifunctional vinyl aromatic copolymer which is obtained by polymerizing 20-99.5 mol% divinyl aromatic compound and 0.5-80 mol% monovinyl aromatic compound in an organic solvent with a dielectric constant of 2-15 in the presence of an initiator such as chloroethylbenzene at 20-100°C.

PTL 8 discloses a specific styrene-methacrylate based copolymer resin composition and manufacturing method thereof.

PTL 9 relates to a specific terminal-modified soluble polyfunctional vinyl aromatic copolymer.

### [Citation List]

### [Patent Literature]

[PTL 1] Japanese Patent Application Publication No. 2003-73434
[PTL 2] Japanese Translation of PCT Application No. 2004-517202
[PTL 3] Japanese Patent Application Publication No. 2005-213381
[PTL 4] WO 2002/000779
[PTL 5] Japanese Patent Application Publication No. 2004-123873
[PTL 6] Japanese Patent Application No. 2010-511071
[PTL 7] Japanese Patent Application No. 2004-123873
[PTL 8] Japanese Patent Application No. 2013-100433
[PTL 9] WO 2016/104748 A1

### [Summary of Invention]

An object of this invention is to solve these problems and to provide a material having processability, strengths, and homogeneity together.

As a result of diligent studies, the inventors of this invention found out that the problems can be solved by using, as a structure unit of the conjugated diene rubber, a specific multifunctional vinyl aromatic copolymer compound having a branch structure and a function of interacting with a filler, thereby accomplishing this invention.

This invention relates to a method for producing a copolymer rubber, including a step of copolymerizing raw materials that includes a multifunctional vinyl aromatic copolymer (A) and a conjugated diene compound (B), wherein:
the multifunctional vinyl aromatic copolymer (A) is used at a use ratio of within the range of 0.001 to 6 wt%,
the multifunctional vinyl aromatic copolymer (A) includes a structure unit (a) derived from a divinyl aromatic compound; a structure unit (b) derived from a monovinyl aromatic compound; and a structure unit (d) constituting a molecular end;
the multifunctional vinyl aromatic copolymer (A) includes not less than 2 mol% but less than 95 mol% of the structure unit (a);
the structure unit (a) partly includes vinyl group-containing structure unit (a1) represented by the following formula: 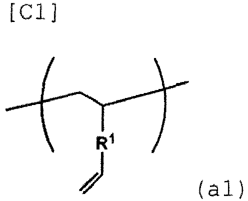 (where R¹ denotes a C₆ to C₃₀ aromatic hydrocarbon group);
the structure unit (a) partly includes, as a part other than the vinyl group-containing structure unit (a1), a structure unit constituting the structure unit (d);
a molar fraction of the vinyl group-containing structure unit (a1) with respect to a sum of the structure unit (a) and (b) is within a range of 0.02 to 0.8, and
a number average molecular weight of the multifunctional vinyl aromatic copolymer (A) is within a range of 300 to 100,000; and the multifunctional vinyl aromatic copolymer (A) is soluble to a solvent.

This invention is a method for producing a copolymer rubber by copolymerizing raw materials including a multifunctional vinyl aromatic copolymer (A), a conjugated diene compound (B), and an aromatic vinyl compound (C), wherein the above-mentioned multifunctional vinyl aromatic copolymer is used as the multifunctional vinyl aromatic copolymer (A).

The structure unit (d) constituting a molecular end is any one of unit represented by (d1) to (d6) (provided that when the structure unit (d) is a unit represented by (d4) or (d5), the structure unit (d) includes both units represented by (d4) and (d5)): 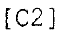 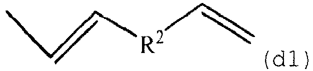
(where R² denotes a C₆ to C₃₀ aromatic hydrocarbon group), 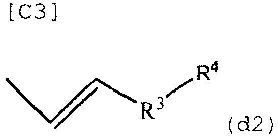
(where R³ denotes a C₆ to C₃₀ aromatic hydrocarbon group, and R⁴ denotes a hydrogen atom or a C₆ to C₃₀ hydrocarbon group),

   -Y-O-Z (d3)
(where Y is a C₆ to C₅₂ aromatic hydrocarbon group which may be unsubstituted or may be substituted with a C₁ to C₁₂ hydrocarbon group, and Z is either a C₁ to C₃₀ aliphatic hydrocarbon group, or a C₆ to C₅₂ aromatic hydrocarbon group which may be unsubstituted or may be substituted with a C₁ to C₁₂ hydrocarbon group), 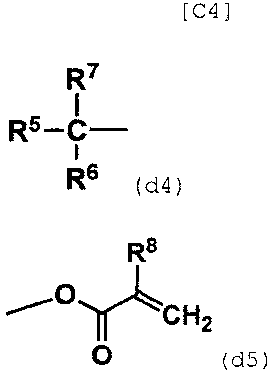
(where R⁵ denotes a hydrogen atom or a C₁ to C₁₈ hydrocarbon group, R⁶ and R⁷ each independently denote a C₁ to C₁₈ hydrocarbon group, and R⁸ denotes a hydrogen atom or a methyl group), 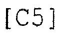 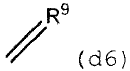
(where R⁹ denotes a C₄ to C₁₆ hydrocarbon group having one or more alicyclic hydrocarbon rings).

Anion polymerization is suitable for carrying out the copolymerization.

Another aspect of this invention is a method for producing a crosslinked rubber composition, including mixing a filler into a copolymer rubber obtained by the above-mentioned method and crosslinking the copolymer rubber by vulcanization so as to obtain the rubber composition.

Furthermore, still another aspect of this invention relates to a
A copolymer rubber, comprising:
a multifunctional vinyl aromatic copolymer structure unit (A1); and
either one of a conjugated diene compound structure unit (B1), or a combination of the conjugated diene compound structure unit (B1) and an aromatic vinyl compound structure unit (C1),
the copolymer rubber containing 0.001 wt% to 6 wt% of the structure unit (A1), 29 wt% to 99.999 wt% of the structure unit (B1), and 0 wt% to 70 wt% of the structure unit (C1), wherein
the multifunctional vinyl aromatic copolymer (A1) includes a structure unit (a) derived from a divinyl aromatic compound; a structure unit (b) derived from a monovinyl aromatic compound; and a structure unit (d) constituting a molecular end;
the multifunctional vinyl aromatic copolymer (A) includes not less than 2 mol% but less than 95 mol% of the structure unit (a) ;
the structure unit (a) partly includes vinyl group-containing structure unit (a1) and
the structure unit (a) partly includes, as a part other than the vinyl group-containing structure unit (a1), a structure unit constituting the structure unit (d); and
a molar fraction of the vinyl group-containing structure unit (a1) with respect to a sum of the structure units (a) and (b)is within a range of 0.02 to 0.8. above-mentioned.

The number average molecular weight of the structure unit (A1) may preferably be within a range of 300 to 100,000. Moreover, the structure unit (d) constituting a molecular end may preferably be any one of units represented by (d1) to (d6) (provided that when the structure unit (d) are units represented by (d4) or (d5), the structure unit (d) includes both units represented by (d4) and (d5)).

Furthermore, yet another aspect of this invention relates to a crosslinked rubber composition including the above-mentioned copolymer rubber, and a filler, the copolymer rubber having a crosslinked structure. Moreover,
this disclosure relates to a multifunctional vinyl aromatic copolymer for use in the above-mentioned copolymer rubber and the above-mentioned crosslinked rubber composition.

The copolymer rubber of this invention has structure units derived from the specific multifunctional vinyl aromatic polymer having the branch structure as well as being interactive with the fillers, thereby attaining processability and the strengths together. Further, the copolymer rubber is homogeneous and is difficult to form gels therefrom, thereby being applicable in molding materials, and modifying agents for resin, and the like.

Furthermore, the crosslinked composition in which the copolymer rubber is mixed with a filler and crosslinked is excellent in dispersibility for the filler, thereby being excellent in mechanical strength and abrasion resistance.

### [Description of Embodiments]

In a method for producing a copolymer rubber according to this invention, raw materials including a multifunctional vinyl aromatic copolymer (A), a conjugated diene compound (B), and, if necessary, an aromatic vinyl compound (C) are used as raw materials and copolymerized.

The multifunctional vinyl aromatic copolymer (A) is one being obtainable by copolymerizing a divinyl aromatic compound and a monovinyl aromatic compound, and preferably being solvent soluble. For example, the multifunctional vinyl aromatic copolymer (A) is preferably soluble in toluene, xylene, tetrahydrofuran, dichloroethane, or chloroform.

The multifunctional vinyl aromatic copolymer (A) has a number average molecular weight Mn in a range of 300 to 100,000, and preferably in a range of 500 to 5,000, and has a molecular weight distribution Mw/Mn preferably in a range of 3 to 20. The multifunctional vinyl aromatic copolymer (A) is soluble to a solvent.

The divinyl aromatic compound provides a structure unit (a) and the monovinyl aromatic compound provides a structure unit (b). The divinyl aromatic compound has a plurality of vinyl groups, and therefore is capable of crosslinking to provide a branch structure but the degree of crosslinking by the divinyl aromatic compound is controlled by its solubility. A structure unit with an unreacted vinyl group becomes the structure unit (a), a structure unit (d1), which is a structure unit (d) constituting a molecular end, or a like structure unit, thereby providing a multifunctional structure having a plurality of vinyl groups.

The multifunctional vinyl aromatic copolymer (A) includes not less than 2 mol% but less than 95 mol%, preferably 5 to 90 mol%, more preferably 10 to 90 mol%, and especially preferably 15 to 85 mol% of the structure unit (a).

It is advantageous that some of the structure unit (a) are the structure unit (a1) by including the structure unit (a1) by 1 mol% or more, preferably in a range of 2 to 80 mol%, more preferably in a range of 5 to 70 mol%, further preferably in a range of 10 to 60 mol%, and especially preferably in a range of 15 to 50 mol%.

Further, it is advantageous that the structure unit (d) constituting a molecular end contain part of the structure unit (a) as a structure unit(s) (d1) by 0.7 unit or more per molecule, preferably 1.0 unit or more per molecule, and more preferably 1.5 units or more per molecule.

It should be noted that this calculation is based on such an assumption that the structure units (a) include the structure units (a1) and the structure units (d1).

Moreover, it is advantageous that the number of the structure unit (d) constituting a molecular end, contained per molecule, is 2.1 units or more on average, preferably 2.5 units or more on average, and more preferably 3 units or more on average.

The multifunctional vinyl aromatic copolymer (A) include the structure unit (b) by not less than 5 mol% but less than 98 mol%, preferably in a range of 10 to 95 mol%, more preferably 10 to 90 mol%, especially preferably 15 to 85 mol%. Part of the structure unit (b) may be a structure unit (d) constituting a molecular end, which are referred to as a structure unit (d2) herein.

The structure unit (a) derived from the divinyl aromatic compound have vinyl groups serving as crosslinking components for exhibiting heat resistance and stiffness. Meanwhile, the structure unit (b) derived from the monovinyl aromatic compound do not have such a vinyl group that relates to curing reaction, thereby providing flexibility, solubility, etc.

The structure unit (d) constituting a molecular end may be formed from part of the structure unit (a) and the structure unit (b), or may be formed by using monomers (G) other than the divinyl aromatic compound and the monovinyl aromatic compound, so as to form the structure unit (d) constituting a molecular end from part or all of the structure unit (This structure unit is referred to as structure unit (d3)).

The multifunctional vinyl aromatic copolymer (A) is obtainable by a method described in PTL 5 or the like. For example, the multifunctional vinyl aromatic copolymer (A) is obtainable by polymerizing, at a temperature in a range of 20°C to 120°C, monomers including a divinyl aromatic compound, a monovinyl aromatic compound, and if necessary, the other monomers (G) in a homogeneous solvent in which the monomers are dissolved therein.

Preferable examples of the divinyl aromatic compound include divinyl benzene (including each isomer thereof), divinyl naphthalene (including each isomer thereof), divinyl biphenyl (including each isomer thereof), but the divinyl aromatic compound is not limited to these. Moreover, these can be used solely or two or more of them can be used in combination. In view of moldability, divinyl benzene (m-isomer, p-isomer, or a mix of these isomers) is more preferable.

Examples of the monovinyl aromatic compound include: vinyl aromatic compounds such as styrene, vinyl naphthalene, and vinyl biphenyl; nuclear alkyl substituted vinyl aromatic compounds such as o-methyl styrene, m-methyl styrene, p-methyl styrene, o,p-dimethyl styrene, o-ethyl vinyl benzene, m-ethyl vinyl benzene, and p-ethyl vinyl benzene; and the like. Styrene, ethyl vinyl benzene (including each isomer), ethyl vinyl biphenyl (including each isomer), and ethyl vinyl naphthalene (including each isomer) are preferable.

Moreover, examples of the other monomers (G) used if necessary include monomers copolymerizable with the divinyl aromatic compounds, or the monovinyl aromatic compound, a terminal modifying agents that provide a desired terminal group, a chain transfer agents, and the like.

As the structure unit (d) constituting a terminal of the multifunctional vinyl aromatic compound (A), units represented by the above-mentioned formulas (d1) to (d6) are preferable. In the case of the unit represented by formula (d4) or (d5), the unit include both of the units represented by formulas (d4) and (d5).

In formula (d1), R² is a C₆ to C₃₀ aromatic hydrocarbon group. Formula (d1) is obtainable from the divinyl aromatic compound as a monomer. Specific examples thereof include divinyl benzene, divinyl naphthalene, divinyl anthracene, divinyl phenanthrene, divinyl biphenyl, divinyl triphenyl, and the like. For the sake of excellent easy handling in rubber solution polymerization of the multifunctional vinyl aromatic copolymer (A) and excellent interaction with fillers, divinyl benzene, divinyl naphthalene, and divinyl biphenyl are preferable.

In formula (d2), R³ is a C₆ to C₃₀ aromatic hydrocarbon group, and R⁴ is a hydrogen atom or a C₆ to C₃₀ hydrocarbon group. Formula (d2) is obtainable from the monovinyl aromatic compound as a monomer. Specific examples thereof include vinyl toluene, ethylvinyl benzene, n-propyl styrene, isopropyl styrene, butyl styrene, methylvinyl naphthalene, ethylvinyl naphthalene, methylvinyl phenanthrene, ethylvinyl phenanthrene, methylvinyl anthracene, ethylvinyl anthracene, methylvinyl biphenyl, ethylvinyl biphenyl, methylvinyl triphenyl, ethylvinyl triphenyl, and the like. For the sake of excellent easy handling in the rubber solution polymerization of the multifunctional vinyl aromatic copolymer (A) and excellent interaction with fillers, it is preferable that R³ be a phenyl group, a naphthyl group, or a biphenyl group, and R⁴ be a hydrogen atom or a C₁ to C₁₀ alkyl group. Specific examples of such preferable ones include vinyl toluene, ethylvinyl benzene, n-propyl styrene, isopropyl styrene, n-butyl styrene, isobutyl styrene, sec-butyl styrene, t-butyl styrene, methylvinyl naphthalene, ethylvinyl naphthalene, methylvinyl biphenyl, ethylvinyl biphenyl, and the like. Examples of more preferable ones include vinyl toluene, ethylvinyl benzene, isopropyl styrene, and t-butyl styrene.

In formula (d3), Y is a C₆ to C₅₂ aromatic hydrocarbon group unsubstituted or substituted with a C₁ to C₁₂ hydrocarbon group, and Z is either a C₁ to C₃₀ aliphatic hydrocarbon group, or a C₆ to C₅₂ aromatic hydrocarbon group unsubstituted or substituted with C₁ to C₁₂ hydrocarbon group. Formula (d3) is obtainable from anisole, ethoxy benzene, propoxy benzene, butoxy benzene, methoxy naphthalene, methoxy biphenyl, and biphenyl ether usable as the monomers (G) . For the sake of excellent easy handling in the rubber solution polymerization of the multifunctional vinyl aromatic copolymer (A) and excellent interaction with fillers, anisole, butoxy benzene, and methoxy naphthalene are preferable.

In formulas (d4) and (d5), R⁵ is a hydrogen atom or a C₁ to C₁₈ hydrocarbon group, R⁶ and R⁷ are each independently a C₁ to C₁₈ hydrocarbon group, and R⁶ and R⁷ may link with each other to form a ring provided that the number of carbons in the ring of R⁶ and R⁷ be 2 to 36 in total. R⁸ is a hydrogen atom or a methyl group. Formulas (d4) and (d5) are obtainable from aliphatic (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, and the like, and 2-ethylhexyl (meth)acrylate, alicyclic (meth)acrylates such as cyclopenthyl (meth)acrylate, cycloxyl (meth)acrylate, and the like, aromatic (meth)acrylates such as phenyl (meth)acrylate, naphthyl (meth) acrylate, and the like, which are usable as the other monomer (G) . For the sake of excellent easy handling in the rubber solution polymerization of the multifunctional vinyl aromatic copolymer (A) and excellent interaction with fillers, isopropyl (meth)acrylate, isobutyl (meth)acrylate, sec-butyl (meth)acrylate, and t-butyl (meth)acrylate are preferable.

In formula (d6), R⁹ is a C₄ to C₁₆ hydrocarbon group having one or more alicyclic hydrocarbon rings. R⁹ bonds with a molecular chain via an adjacent carbon-carbon double bond. Formula (d6) is obtainable from cyclopentene, cyclohexene, norbornene, dicyclopenta-monoene and the like, which are usable as the monomer (G) . For the sake of excellent easy handling in the rubber solution polymerization of the multifunctional vinyl aromatic copolymer (A) and excellent interaction with fillers, norbornene is preferable.

As a catalyst for the copolymerization of the monomers including the divinyl aromatic compound, the monovinyl aromatic compound, and if necessary the monomer (G), an acid catalyst or a Lewis acid catalyst is suitable.

As the acid catalyst, sulfonic acid catalysts such as alkyl sulfonic acid, and toluene sulfonic acid are usable. The acid catalyst is used in a range of 0.1 to 10 mol per total 100 mol of all the monomer components.

As the Lewis acid catalyst, any compounds having a metallic ion (acid) and a ligand (base), which are able to receive an electron pair, are usable without any particular limitations. For the sake of resistance to thermal decomposition of the resultant copolymer, metal fluorides or complexes thereof are preferable among Lewis acid catalysts, and 2 to 6 valent metal fluorides of B, Al, Ga, In, Si, Ge, Sn, Pb, Sb, Bi, Ti, W, Zn, Fe, V and the like, or complexes thereof are especially preferable. These catalysts can be used solely or two or more of them can be used in combination. In order to control the molecular weight and molecular weight distribution of the resultant copolymer, and in view of polymerization activity, ether complexes of boron trifluoride are most preferably usable. Here, examples of ethers in the ether complexes include diethyl ether, dimethyl ether, and the like.

It is advantageous that the Lewis acid catalyst is used in a range of 0.001 to 100 mol, more preferably in a range of 0.01 to 50 mol, and most preferably in a range of 0.1 to 10 mol per total 100 mol of all the monomer components.

If desired, one or more Lewis base compounds may be used as a co-catalyst. Specific examples of the Lewis base compounds include ester compounds such as ethyl acetate and the like, thioester compounds such as methyl mercapto propionic acid and the like, ketone compounds such as methyl ethyl ketone and the like, amine compounds such as methylamine and the like, ether compounds such as diethyl ether and the like, thioether compounds such as diethylsulfide and the like, and phosphine compounds such as tripropylphosphine, tributylphosphine, and the like.

For example, the polymerization may be suitably carried out by performing, at a temperature in a range of 20°C to 120°C, preferably in a range of 40°C to 100°C, cation copolymerization in a homogenous solvent in which the above-mentioned monomers, and the acid catalyst or the Lewis acid catalyst are dissolved in an organic solvent of a dielectric constant of 2.0 to 15.0.

As the organic solvent, for the sake of balance between polymerization activity and solubility, toluene, xylene, n-hexane, cyclohexane, methyl cyclohexane, or ethyl cyclohexane is especially preferable.

How to collect the multifunctional vinyl aromatic copolymer after the polymerization is terminated is not particularly limited, and the collection may be carried out by an usual method such as thermal condensation, steam stripping, precipitation using a poor solvent, and the like.

The copolymer rubber is produced by copolymerizing raw materials including the multifunctional vinyl aromatic copolymer (A), the conjugated diene compound (B), and if necessary, the aromatic vinyl compound (C). When the aromatic vinyl compound (C) is not used, it is possible to produce a diene-type rubber such as butadiene rubber and isoprene rubber. When the aromatic vinyl compound (C) is used, it is possible to produce a copolymer rubber such as SBR.

To produce a copolymer rubber by copolymerizing raw materials including the conjugated diene compound (B) and the aromatic vinyl compound (C), the methods described in PTL 1 to 4 may be adopted, provided that the multifunctional vinyl aromatic copolymer (A) is used as one of the raw materials.

As the conjugated diene compound (B), 1,3-butadiene, isoprene, 1,3-pentadiene, 2,3-dimethyl-1,3-butadiene, 2-phenyl-1,3-butadiene, and 1,3-hexadiene may be used solely or two or more of them may be used in combination. Among them, 1,3-butadiene, isoprene, and 2,3-dimethyl-1,3-butadiene are preferable.

As the aromatic vinyl compound, styrene, α-methylstyrene, 1-vinylnaphthalene, 3-vinyltoluene, ethylvinylbenzene, divinylbenzene, 4-cyclohexylstyrene, 2,4,6-trimethylstyrene, tert-butoxydimethylsilylstyrene, isopropoxydimethylsilylstyrene and the like may be used solely or two or more of them may be used in combination. Among them, styrene is preferable.

When the conjugated diene compound (B) is 1,3-butadiene and the aromatic vinyl compound is styrene, so-called styrene-butadiene rubber (SBR) is obtained. Moreover, when styrene is not used as the aromatic vinyl compound while the conjugated diene compound (B) is 1, 3-butadiene, so-called butadiene rubber (BR) is obtained. When the conjugated diene compound (B) is isoprene while no structure unit of the aromatic vinyl compound (C) is included, isoprene rubber (IR) is obtained. Among them, it is especially preferable to have the styrene-butadiene rubber (SBR) structure for the sake of excellent abrasion resistance, heat resistance, and aging resistance.

How to produce a copolymer rubber by copolymerizing the raw materials including these is not particularly limited, but anion polymerization in a hydrocarbon solvent is preferable.

For example, in a hydrocarbon solvent with an organic alkali metal compound as an initiator, the copolymerization may be carried out by a method in which living anion polymerization of the multifunctional vinyl aromatic copolymer and the conjugated diene compound, or of these and the aromatic vinyl compound is performed, or by a multistage reaction method in which living anion polymerization of the conjugated diene compound and the aromatic vinyl compound is performed and further reaction is performed with the multifunctional vinyl aromatic copolymer added thereto. Moreover, if necessary, a terminal may be terminal-modified with a polymerization terminator having a functional group.

Specific examples of the hydrocarbon solvent usable in these methods include propane, n-butane, isobutane, n-pentane, isopentane, n-hexane, cyclohexane, propene, 1-butene, isobutene, trans-2-butene, cis-2-butene, 1-pentine, 2-pentine, 1-hexene, 2-hexene, benzene, toluene, xylene, ethyl benzene, heptane, cyclopentane, methylcyclopentane, methylcyclohexane, 1-pentene, 2-pentene, cyclohexene, and the like.

Moreover, examples of the organic alkali metal usable as the initiator include reaction products from reactions with methyllithium, ethyllithium, n-propyllithium, iso-propyllithium, n-butyllithium, sec-butyllithium, tert-octyllithium, n-decyllithium, phenyllithium, 2-naphthyllithium, 2-butyl-phenyllithium, 4-phenyl-butyl lithium, cyclohexyl lithium, diisopropenylbenzene, butyllithium, and the like.

How to use the multifunctional vinyl aromatic copolymer (A) in the polymerization is not particularly limited. For example, the multifunctional vinyl aromatic copolymer (A) may be used by starting the polymerization with the multifunctional vinyl aromatic copolymer (A) in the presence of the conjugated diene compound (B) and, if necessary, the aromatic vinyl compound (C), by reacting (A) with the polymerization initiator and adding the conjugated diene compound (B) and, if necessary, the aromatic vinyl compound (C) thereto thereafter, by adding the multifunctional vinyl aromatic copolymer (A) during polymerization of the conjugated diene compound (B) and, if necessary, the aromatic vinyl compound (C), thereby giving a resultant rubber molecule a branched structure, by adding the multifunctional vinyl aromatic copolymer (A) at a last stage of polymerization of the conjugated diene compound (B) and, if necessary, the aromatic vinyl compound (C), thereby coupling a resultant rubber molecule, or by the like method.

It is advantageous that a weight average molecular weight of the copolymer rubber is in a range of 100,000 to 500,000. The reaction may be terminated by adding alkanol or the like method, and desolvated thereafter to obtain the copolymer rubber.

It is preferable that the multifunctional vinyl aromatic copolymer (A), the conjugated diene compound (B) and the aromatic vinyl compound (C) be used at the following use ratios.

The multifunctional vinyl aromatic copolymer (A) is in a range of 0.001 to 6 wt%, preferably in a range of 0.005 to 3 wt%, and further preferably in a range of 0.01 to 2 wt%, the conjugated diene compound (B) is in a range of 94 to 99.999 wt%, and the aromatic vinyl compound (C) is in a range of 0 to 70 wt%.

In case the aromatic vinyl compound (C) is used, the multifunctional vinyl aromatic copolymer (A) is in the ranges as above, the conjugated diene compound (B) is in a range of 50 to 97 wt%, and preferably in a range of 55 to 90 wt%, and the aromatic vinyl compound (C) is in a range of 2 to 50 wt%, and preferably in a range of 5 to 45 wt%.

The followings are more preferable: the multifunctional vinyl aromatic copolymer (A) is in a range of 0.01 to 23 wt%, and further preferably in a range of 0.1 to 1 wt%; the conjugated diene compound (B) be in a range of 50 to 97 wt%, and further preferably in a range of 55 to 90 wt%; and the aromatic vinyl compound (C) be in a range of 2 to 49 wt%, and further preferably in a range of 5 to 44 wt%.

The copolymer rubber according to this invention contains multifunctional vinyl aromatic copolymer structure unit (A1), conjugated diene compound structure unit (B1), and aromatic vinyl compound structure unit (C1) at the following percentages: the structure unit (A1) be in a range of 0.001 to 6 wt%; the structure unit (B1) be in a range of 29 to 99.999 wt%; and the structure unit (C1) be in a range of 0 to 70 wt%.

It includes the structure unit (a) derived from the divinyl aromatic compound, the structure unit (b) derived from the monovinyl aromatic compound, and the structure unit (d) constituting a molecular end by containing the structure unit (a) by not less than 2 mol% but less than 95 mol%, wherein at least part of the structure unit (a) is vinyl group modified structure unit (a1) represented by the following formula: 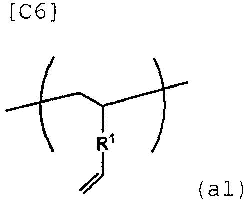 (where R¹ is a C₆ to C₃₀ aromatic hydrocarbon group),
at least part of the remaining of the structure unit (a) is structure units constituting the structure unit (d), and the vinyl group-containing structure unit (a1) are in a molar fraction in a range of 0.02 to 0.8 with respect to the sum of the structure units (a) and (b), and the number average molecular weight is in a range of 300 to 100,000.

Preferably, the structure unit contents are at a ratio in a range similar to those of the use ratios of the raw materials.

A crosslinked rubber composition according to this invention is obtainable by mixing a filler and/or a crosslinking agent into the copolymer rubber to prepare a rubber composition and crosslinking the rubber composition by vulcanization. The filler may be carbon black, silica, or the like. Especially, the crosslinked rubber composition excellently interacts with carbon black.

As the carbon black to be contained as a filler, carbon black of various grades such as SRF, GPF, FEF, HAF, ISAF, SAF and the like. Among them, HAF, ISAF, and SAF are preferably, because they give a rubber elastic body with excellent abrasion resistance.

The silica is in a particle form generally employed for the use as a filler, but it is preferable that the silica have a primary particle size of 50 nm or less. Specific examples of such silica includes hydrous silicic acid, anhydrous silicic acid, calcium silicate, aluminum silicate and the like.

The filler is contained preferably by 10 to 120 parts by mass, and, for the sake of the reinforcing property and improvement of various properties due to the reinforcing property, more preferably by 55 to 100 parts by weight with respect to 100 parts by weight of the whole rubber content including the copolymer rubber.

The crosslinking agent to be contained in the rubber composition is not particularly limited and may be for sulfur crosslinking, peroxide crosslinking or the like. Generally sulfur is used. The crosslinking agent is contained preferably by 0.1 to 5 parts by weight, and more preferably by 1 to 3 parts by weight with respect to 100 parts by weight of the whole rubber content.

Apart from the components mentioned above, the rubber composition may contain, if necessary, a silane coupling agent, oils for mixing in rubbers, such as paraffin-base oil, naphthene-base oil, aromatic oil, or the like, wax, an anti-aging agent, stearic acid (vulcanization auxiliary agent and processing aid), zinc oxide, a vulcanization accelerator, or the other agent.

The rubber composition may be prepared by kneading the components by using a kneader such as a plastomill, a Banbury mixer , rolls, an internal mixer, or the like. More specifically, it is preferably that, among the components, the components other than the crosslinking agent and the vulcanization accelerator be mixed to obtain a mixture, and the mixture be further mixed after the crosslinking agent and the vulcanization accelerator are added.

The rubber composition according to this invention is excellent in mechanical strength and abrasion resistance, and therefore is suitably applicable as a rubber composition for producing treads of tires such as low-fuel consumption tires, large-size tires, and high-performance tires, and sidewall members. Moreover, the rubber composition according to this invention is suitably applicable as a raw material for rubber belts, rubber hoses, footwear, and the like.

A crosslinked rubber composition according to this invention is obtainable by crosslinking the rubber composition. For example, the tires may be produced by extruding and shaping the rubber composition into a tire shape (more specifically, a tread shape), heating the rubber composition in the tire shape under pressure in a vulcanization device so as to produce a tread, and assembling the tread with the other components to produce an intended tire.

### Examples

In the following, this invention will be described in more detail referring to Examples. It should be noted that this invention is not limited to these Examples. The word "parts" in each Example means parts by weight unless otherwise specified, and the properties were evaluated by the methods described below.
1) Molecular Weights and Molecular Weight Distributions
   Molecular weights and molecular weight distributions were measured by using a GPC (Tosoh Corporation, HLC-8220GPC) with tetrahydrofuran (THF) as a solvent, a flow rate of 1.0 ml/min, a column temperature of 38°C, and a standard curve of monodispersed polystyrene.
2) Structure of Multifunctional Vinyl Aromatic Copolymers
   The structures of multifunctional vinyl aromatic copolymers were determined by ¹³C-NMR and ¹H-NMR analysis using JNM-LA 600 type nuclear magnetic resonance spectrometer made by JEOL Ltd. Chloroform-d₁ was used as a solvent and a resonance line of tetramethylsilane was used as an internal standard.
3) Analysis of Terminal Groups
   The terminal groups were counted out by calculating the number of terminal groups contained per molecule of the multifunctional vinyl aromatic copolymer from a number average molecular weight obtained by the above-mentioned GPC measurement and from an amount of a derivative used for introducing a terminal group with respect to a total monomer amount, which amount of the derivative was obtained by results of ¹³C-NMR and ¹H-NMR measurements and gas chromatography (GC) analysis. In Synthesis Example 1, the terminal group occurs from divinyl aromatic compound or a monovinyl aromatic compound. The terminal group is counted by calculating the amount of a specific structure unit introduced at terminals on the basis of data relating to the sum of units introduced in the copolymer, obtained by GC analysis, in addition to the ¹³C-NMR and ¹H-NMR measurement results, so that the amount of the specific structure unit introduced at terminals and the number average molecular weight obtained by the above-mentioned GPC measurement were used to work out the number of the specific structure unit contained per molecule of the multifunctional vinyl aromatic copolymer as the terminal groups.
4) Mooney Viscosity (ML(1+4) 100°C)
   According to JIS K 6300-1, the Mooney viscosity was measured by using an L-shape rotor with 1-minute preheating, 4-mimute rotor operation time, and a measuring temperature of 100°C.
5) Confirmation of Presence of Gels
   A copolymer rubber is dissolved in cyclohexane of an amount 5 times heavier than the copolymer rubber, and a resultant solution was filtered with a filter to visually confirm whether there was any residuals on the filter. If there was any residuals, it was judged that gels were present.
6) Tension Strength
   According to the JIS K 6251 tension strength testing method, 300% modulus was measured and indexed based on the measurement of the crosslinking rubber obtained in Comparative Example 1 as 100. A greater index indicates a greater tension strength.
7) Abrasion Resistance
   With a method using a Lambourn Abrasion tester according to JIS K 6264, abrasion amounts at a 30% slip rate were measured and indexed based on the measurement of the crosslinked rubber obtained in Comparative Example 1 as 100. A greater index indicates a greater abrasion resistance.

### Synthesis Example 1

Into a 1.0-L reaction vessel, DVB-810 (Nippon Steel & Sumikin Chemical Co., Ltd.; divinyl benzene content 81.0 wt%) of 320.5 mL (divinyl benzene content 1.82 mol, ethylvinyl benzene content 0.43 mol), n-butyl acetate of 0.28 mol (36.9 mL), and toluene of 140 mL were poured and a solution in which 40 mmol of methanesulfonic acid was dissolved in n-butyl acetate of 0.12 mol (15.7 mL) was added thereto at 70°C. After that, reaction was carried out for 6 hours and a polymerization solution thereof was terminated with calcium hydroxide and filtered with an active alumina as a filter aid to obtain a filtrate. After that, the filtrate was devolatilized at 60°C under reduced pressure to obtain 22.6 g of soluble multifunctional vinyl aromatic copolymer (copolymer X1).

The copolymer X1 thus obtained had Mn of 1085, Mw of 12400, and Mw/Mn of 11.4. By the GC analysis, GPC measurement, FT-IR, ¹³C-NMR and ¹H-NMR analysis, it was confirmed that the copolymer X contained a vinyl group-containing structure unit (a1) and a terminal group (d1) derived from the divinyl aromatic compound (a) as below and a terminal group (d2) derived from the monovinyl aromatic compound (b) as below. 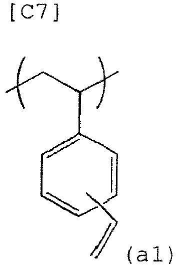 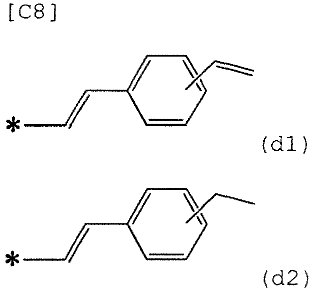 (where * indicates a bonding site with the main chain of the copolymer X1).

Moreover, the number of terminal structure unit (d1) per molecule was 7.7. Furthermore, the copolymer X1 contained the structure units derives from the divinyl benzene component and ethyl vinyl benzene by 84.0 mol% and 16.0 mol%, respectively with respect to the total of them. Moreover, a molar fraction of the vinyl group-containing structure unit (a1) in the copolymer X1 was 0.39 with respect to the whole structure.

Furthermore, the copolymer X1 was soluble in toluene, xylene, THF, dichloroethane, dichloromethane, and chloroform, and no gel generation was found therein.

### Synthesis Example 2

A copolymer X2 was obtained in the same fashion as in Synthesis Example 1, except that 276.4 mL of DVB-810, 86.2 mL of toluene, and 93.74 mL of anisole were poured into a 1.0 L reactor vessel, a solution in which 10 mmol of methanesulfonic acid was dissolved in 2 mL of toluene was added thereto at 50°C, and reaction was carried out for 4 hours.

The copolymer X2 thus obtained had Mn of 1000, Mw of 18800, and Mw/Mn of 18.8. By the GC analysis, GPC measurement, FT-IR, ¹³C-NMR and ¹H-NMR analysis, it was confirmed that the copolymer X2 contained vinyl group-containing structure unit (a1) derived from the divinyl aromatic compound (a) as in Synthesis Example 1, and a terminal group (d3) derived from anisole. 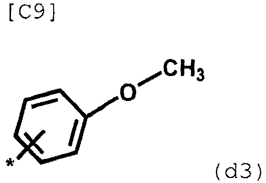 (where * indicates a bonding site with the copolymer main chain) .

In the copolymer X2, the structure unit (a) derived from divinyl benzene component were contained by 64.0 mol% with respect to the whole structure, and the number of the terminal structure groups (d3) derived from anisole per molecule was 2.0 on average. A molar fraction of the vinyl group-containing structure unit (a1) in the copolymer X2 was 0.12 with respect to the whole structure. Furthermore, the copolymer X2 was soluble in toluene, xylene, THF, dichloroethane, dichloromethane, and chloroform, and no gel generation was found therein.

### Synthesis Example 3

A copolymer X3 was obtained in the same fashion as in Synthesis Example 1, except that 300 mL of DVB-810, 177.6 mL of toluene, and 145.6 mL of t-butyl methacrylate, and a solution in which 10 mmol of methanesulfonic acid was dissolved in 2 mL of toluene was added thereto at 60°C, and reaction was carried out for 4 hours.

The copolymer X3 thus obtained had Mn of 2190, Mw of 13600, and Mw/Mn of 7.2. By the GC analysis, GPC measurement, FT-IR, ¹³C-NMR and ¹H-NMR analysis, it was confirmed that the copolymer X3 contained a vinyl group-containing structure unit (a1) derived from the divinyl aromatic compound (a) as in Synthesis Example 1, and a terminal group (d4) derived from t-butyl methacrylate (R⁵, R⁶, R⁷ = CH₃) and a terminal group (d5) (R⁸ = CH₃) .

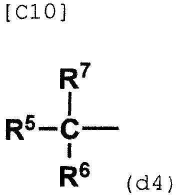

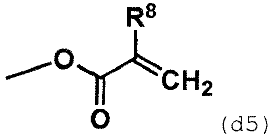

In the copolymer X3, the structure unit (a) derived from the divinyl benzene were contained by 71 mol% with respect to the whole structure, and the numbers of the terminal structure groups (d4) and (d5) derived from t-butyl methacrylate per molecule were 1.7, respectively on average. A molar fraction of the vinyl group-containing structure unit (a1) in the copolymer X3 was 0.53 with respect to the whole structure.

Furthermore, the copolymer X3 was soluble in toluene, xylene, THF, dichloroethane, dichloromethane, and chloroform, and no gel generation was found therein.

### Example 1

Into an autoclave reactor of 0.5-L capacity purged with nitrogen, 245 g of cyclohexane, 2.5 g of THF, 10 g of styrene, 40 g of 1,3-butadiene, and 0.015 g of the copolymer X1 obtained in the Synthesis Example 1 were added. After 5 g of a cyclohexane solution containing 50 mg of sec-butyl lithium was added at 25°C, polymerization was started. A reaction solution thus prepared was heated by polymerization heat and reached a highest temperature of 85°C.

After confirming that polymerization conversion ratio reached 99%, 50 mg of isopropanol was added to terminate the polymerization, and 2, 6-di-tert-butyl-p-crezol (BHT) was added in the reaction solution. Then, steam stripping was carried out to remove the solvent, thereby obtaining a copolymer rubber A, the properties of which are shown on Table 1.

### Example 2

The copolymer rubber A, process oil, carbon black, zinc oxide, stearic acid, and an anti-aging agent were mixed and kneaded at 155°C at 60 rpm for 4 min by using a labo plastomill, thereby obtaining a kneaded mixture.

After sulfur and vulcanization accelerator were added therein, the kneaded mixture was mixed and kneaded at 70 °C at 60 rpm for 1 min by using the labo plastomill so as to carry out vulcanization, thereby obtaining a crosslinked rubber A.

Mixing ratios of the additives are shown on Table 2. Properties of the crosslinked rubber A are shown on Table 3.

### Examples 3 and 4

A copolymer rubber C and a copolymer rubber D were obtained in the same fashion as in Example 1, except that the copolymer X2 or the copolymer X3 was used instead of the copolymer X1. Resultant properties thereof are shown on Table 1.

### Examples 5 and 6

A crosslinked rubber C and a crosslinked rubber D were obtained in the same fashion as in Example 2, except that the copolymer rubber C or the copolymer rubber D was used instead of the copolymer rubber A. Resultant properties thereof are shown on Table 3.

### Comparative Example 1

A copolymer rubber B was obtained in the same fashion as in Example 1, except that 0.005 g (based on divinyl benzene) of DVB-810 was used instead of the copolymer X1 synthesized in Synthesis Example 1. Properties of the copolymer rubber B thus obtained are shown on Table 1.

### Comparative Example 2

Furthermore, the copolymer rubber B was used to prepare a crosslinked rubber B by employing the same method and additive ratios as in Example 1. Properties of the crosslinked rubber B are shown on Table 3.

**[Table 1]**

| | Copolymer | Copolymer Rubber | Mw (×10,000) | Mooney viscosity | Gels |
|---|---|---|---|---|---|
| Example 1 | X1 | A | 30 | 37 | Absent |
| Example 3 | X2 | C | 30 | 37 | Absent |
| Example 4 | X3 | D | 30 | 37 | Absent |
| Comparative Example 1 | DVB-810 | B | 30 | 37 | Present |

**[Table 2]**

| | |
|---|---|
| Copolymer Rubber | 100.0 |
| Process Oil | 37.5 |
| Zinc Oxide | 3.0 |
| Sulfur | 1.8 |
| Stearic Acid | 1.0 |
| Carbon Black | 70.0 |
| Vulcanization Accelerator | 1.5 |
| Anti-aging Agent | 1.0 |

In Table 2, the additives used are as follows. Rubber compounded oil: made by Idemitsu Kosan Co., Ltd., Diana process oil AC-12
Sulfur: made by Tsurumi Chemical Industry Co., Ltd., sulfur powder Zinc oxide: made by Mitsui Mining & Smelting Co., Ltd., Zinc White No. 1
Stearic acid: made by NOF Corporation
Carbon black: made by NSCC Carbon Co., Ltd., Niteron #300 Vulcanization accelerator: N-tert-butylbenzothiazole-2-sulfenic amide
Anti-aging agent: made by Ouchi Shinko Chemical Industrial Co., LTD., Nocceler NS
Compounded rubber

**[Table 3]**

| | Crosslinked Rubber | Tensile Strength Index | Abrasion Resistance Index |
|---|---|---|---|
| Example 2 | A | 105 | 105 |
| Example 5 | C | 104 | 103 |
| Example 6 | D | 105 | 105 |
| Comparative Example 2 | B | 100 | 100 |

Tables 1 and 3 show that the rubber compositions according to this invention can provide a processability equivalent to the use of divinyl benzene, which is a known branching agent, and provides a carbon-black-mixed vulcanized rubber with excellent tensile strength and abrasion resistance.

### [Industrial Applicability]

A copolymer rubber according to this invention is applicable as elastomer materials for tires (especially tire treads), seismic isolation rubbers, rubber hoses, rubber rollers, footwear materials, and the like.

## Claims

1. A method for producing a copolymer rubber, comprising a step of copolymerizing raw materials that includes a multifunctional vinyl aromatic copolymer (A) and a conjugated diene compound (B), wherein:
the multifunctional vinyl aromatic copolymer (A) is used at a use ratio of within the range of 0.001 to 6 wt%,
the multifunctional vinyl aromatic copolymer (A) includes a structure unit (a) derived from a divinyl aromatic compound; a structure unit (b) derived from a monovinyl aromatic compound; and a structure unit (d) constituting a molecular end;
the multifunctional vinyl aromatic copolymer (A) includes not less than 2 mol% but less than 95 mol% of the structure unit (a);
the structure unit (a) partly includes vinyl group-containing structure unit (a1) represented by the following formula: 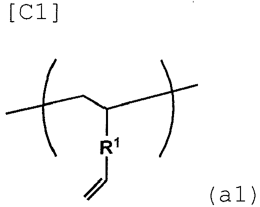 (where R¹ denotes a C₆ to C₃₀ aromatic hydrocarbon group);
the structure unit (a) partly includes, as a part other than the vinyl group-containing structure unit (a1), a structure unit constituting the structure unit (d);
a molar fraction of the vinyl group-containing structure unit (a1) with respect to a sum of the structure unit (a) and (b) is within a range of 0.02 to 0.8, and
a number average molecular weight of the multifunctional vinyl aromatic copolymer (A) is within a range of 300 to 100,000; and
the multifunctional vinyl aromatic copolymer (A) is soluble in a solvent.

2. The method for producing a copolymer rubber according to claim 1, wherein
the copolymer rubber is produced by copolymerization of the raw materials including the multifunctional vinyl aromatic copolymer (A), the conjugated diene compound (B), and an aromatic vinyl compound (C).

3. The method for producing a copolymer rubber according to claim 1 or 2, wherein
the structure unit (d) constituting a molecular end is any one of unit represented by (d1) to (d6) (provided that when the structure unit (d) is a unit represented by (d4) or (d5), the structure unit (d) includes both units represented by (d4) and (d5)): 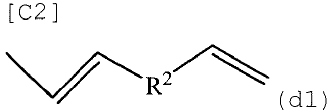
(where R² denotes a C₆ to C₃₀ aromatic hydrocarbon group), 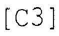 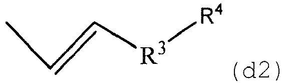
(where R³ denotes a C₆ to C₃₀ aromatic hydrocarbon group, and R⁴ denotes a hydrogen atom or a C₆ to C₃₀ hydrocarbon group),
-Y-O-Z (d3)
(where Y is a C₆ to C₅₂ aromatic hydrocarbon group which may be unsubstituted or may be substituted with a C₁ to C₁₂ hydrocarbon group, and Z is either a C₁ to C₃₀ aliphatic hydrocarbon group, or a C₆ to C₅₂ aromatic hydrocarbon group which may be unsubstituted or may be substituted with a C₁ to C₁₂ hydrocarbon group), 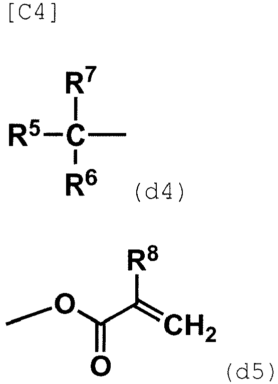
(where R⁵ denotes a hydrogen atom or a C₁ to C₁₈ hydrocarbon group, R⁶ and R⁷ each independently denote a C₁ to C₁₈ hydrocarbon group, and R⁸ denotes a hydrogen atom or a methyl group), 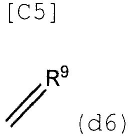
(where R⁹ denotes a C₄ to C₁₆ hydrocarbon group having one or more alicyclic hydrocarbon rings).

4. The method for producing a copolymer rubber according to any one of claims 1 to 3, wherein the copolymerization is carried out by anion polymerization.

5. A method for producing a crosslinked rubber composition, comprising:
mixing a filler into a copolymer rubber obtained by the method according to any one of claims 1 to 4, and
crosslinking the copolymer rubber by vulcanization so as to obtain the rubber composition.

6. A copolymer rubber, comprising:
a multifunctional vinyl aromatic copolymer structure unit (A1); and
either one of a conjugated diene compound structure unit (B1), or a combination of the conjugated diene compound structure unit (B1) and an aromatic vinyl compound structure unit (C1),
the copolymer rubber containing 0.001 wt% to 6 wt% of the structure unit (A1), 29 wt% to 99.999 wt% of the structure unit (B1), and 0 wt% to 70 wt% of the structure unit (C1), wherein
the multifunctional vinyl aromatic copolymer (A1) includes a structure unit (a) derived from a divinyl aromatic compound; a structure unit (b) derived from a monovinyl aromatic compound; and a structure unit (d) constituting a molecular end;
the multifunctional vinyl aromatic copolymer (A) includes not less than 2 mol% but less than 95 mol% of the structure unit (a);
the structure unit (a) partly includes vinyl group-containing structure unit (a1) represented by the following formula: 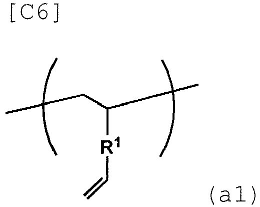 (where R¹ denotes a C₆ to C₃₀ aromatic hydrocarbon group), and
the structure unit (a) partly includes, as a part other than the vinyl group-containing structure unit (a1), a structure unit constituting the structure unit (d);
a molar fraction of the vinyl group-containing structure unit (a1) with respect to a sum of the structure units (a) and (b)is within a range of 0.02 to 0.8, and a number average molecular weight of the structure unit (A1) is within a range of 300 to 100,000.

7. The copolymer rubber according to claim 6, wherein
the structure unit (A1) has a number average molecular weight of within a range of 300 to 100,000.

8. The copolymer rubber according to claim 6 or 7, wherein
the structure unit (d) constituting a molecular end is any one of units represented by (d1) to (d6) (provided that when the structure unit (d) are units represented by (d4) or (d5), the structure unit (d) includes both units represented by (d4) and (d5)) : 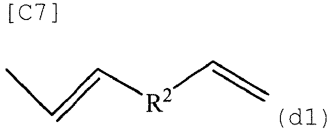
(where R² denotes a C₆ to C₃₀ aromatic hydrocarbon group), 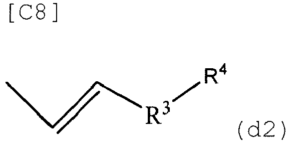
(where R³ denotes a C₆ to C₃₀ aromatic hydrocarbon group, and R⁴ denotes a hydrogen atom or a C₆ to C₃₀ hydrocarbon group),
-Y-O-Z (d3)
(where Y is a C₆ to C₅₂ aromatic hydrocarbon group which may be unsubstituted or may be substituted with a C₁ to C₁₂ hydrocarbon group, and Z is either a C₁ to C₃₀ aliphatic hydrocarbon group, or a C₆ to C₅₂ aromatic hydrocarbon group which may be unsubstituted or may be substituted with C₁ to C₁₂ hydrocarbon group), 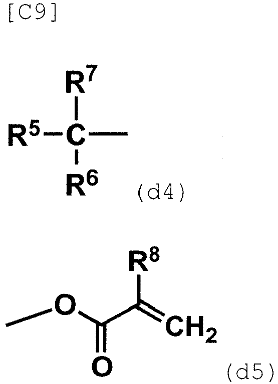
(where R⁵ denotes a hydrogen atom or a C₁ to C₁₈ hydrocarbon group, R⁶ and R⁷ each independently denote a C₁ to C₁₈ hydrocarbon group, and R⁶ denotes a hydrogen atom or a methyl group), 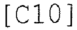 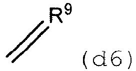
(where R⁹ denotes a C₄ to C₁₆ hydrocarbon group having one or more alicyclic hydrocarbon rings).

9. A crosslinked rubber composition, comprising
the copolymer rubber according to any one of claims 6 to 8, and a filler, and
the copolymer rubber has a crosslinked structure.

## Patentansprüche

1. Ein Verfahren zur Herstellung eines Copolymerkautschuks, umfassend einen Schritt des Copolymerisierens von Ausgangsmaterialien, die ein multifunktionelles vinylaromatisches Copolymer (A) und eine konjugierte Dienverbindung (B) beinhalten, wobei:
das multifunktionelle vinylaromatische Copolymer (A) in einem Verwendungsverhältnis im Bereich von 0,001 bis 6 Gew.-% verwendet wird,
das multifunktionelle vinylaromatische Copolymer (A) eine Struktureinheit (a), die von einer aromatischen Divinylverbindung abgeleitet ist; eine Struktureinheit (b), die von einer aromatischen Monovinylverbindung abgeleitet ist; und eine Struktureinheit (d), die ein molekulares Ende darstellt, beinhaltet;
das multifunktionelle vinylaromatische Copolymer (A) mindestens 2 Mol-%, aber weniger als 95 Mol-% der Struktureinheit (a) beinhaltet;
die Struktureinheit (a) teilweise eine Vinylgruppen enthaltende Struktureinheit (a1) beinhaltet, die durch die folgende Formel dargestellt wird: 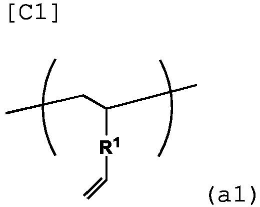 (wobei R¹ eine C₆ bis C₃₀ aromatische Kohlenwasserstoffgruppe bezeichnet);
die Struktureinheit (a) teilweise als einen anderen Teil als die Vinylgruppen enthaltende Struktureinheit (a1) eine Struktureinheit beinhaltet, die die Struktureinheit (d) darstellt;
der molare Anteil der Vinylgruppen enthaltenden Struktureinheit (a1) bezogen auf die Summe der Struktureinheiten (a) und (b) in einem Bereich von 0,02 bis 0,8 liegt, und
ein Zahlenmittel des Molekulargewichts des multifunktionellen vinylaromatischen Copolymers (A) in einem Bereich von 300 bis 100.000 liegt; und
das multifunktionelle vinylaromatische Copolymer (A) in einem Lösungsmittel löslich ist.

2. Das Verfahren zur Herstellung eines Copolymerkautschuks nach Anspruch 1, wobei
der Copolymerkautschuk durch Copolymerisation der Ausgangsmaterialien einschließlich des multifunktionellen vinylaromatischen Copolymers (A), der konjugierten Dienverbindung (B) und einer aromatischen Vinylverbindung (C) hergestellt wird.

3. Das Verfahren zur Herstellung eines Copolymerkautschuks nach Anspruch 1 oder 2, wobei
die Struktureinheit (d), die ein molekulares Ende darstellt, eine der durch (d1) bis (d6) dargestellten Einheiten ist (mit der Maßgabe, dass, wenn die Struktureinheit (d) eine durch (d4) oder (d5) dargestellte Einheit ist, die Struktureinheit (d) beide durch (d4) und (d5) dargestellten Einheiten beinhaltet): 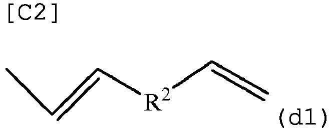
(wobei R² eine C₆ bis C₃₀ aromatische Kohlenwasserstoffgruppe bezeichnet), 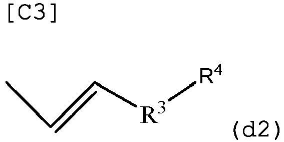
(wobei R³ eine C₆ bis C₃₀ aromatische Kohlenwasserstoffgruppe und R⁴ ein Wasserstoffatom oder eine C₆- bis C₃₀-Kohlenwasserstoffgruppe bezeichnet),
-Y-O-Z (d3)
(wobei Y eine C₆ bis C₅₂ aromatische Kohlenwasserstoffgruppe ist, die unsubstituiert oder mit einer C₁- bis
C₁₂-Kohlenwasserstoffgruppe substituiert sein kann, und Z entweder eine aliphatische C₁- bis C₃₀-Kohlenwasserstoffgruppe oder eine C₆ bis C₅₂ aromatische Kohlenwasserstoffgruppe ist, die unsubstituiert oder mit einer C₁- bis C₁₂-Kohlenwasserstoffgruppe substituiert sein kann), 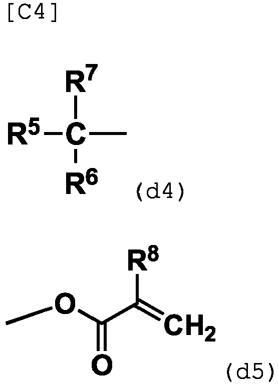
(wobei R⁵ ein Wasserstoffatom oder eine C₁- bis C₁₈-Kohlenwasserstoffgruppe, R⁶ und R⁷ jeweils unabhängig eine C₁- bis C₁₈-Kohlenwasserstoffgruppe und R⁸ ein Wasserstoffatom oder eine Methylgruppe bezeichnen), 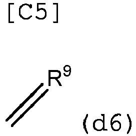
(wobei R⁹ eine C₄- bis C₁₆-Kohlenwasserstoffgruppe mit einem oder mehreren alicyclischen Kohlenwasserstoffringen bezeichnet).

4. Das Verfahren zur Herstellung eines Copolymerkautschuks nach einem der Ansprüche 1 bis 3, wobei die Copolymerisation durch Anionenpolymerisation durchgeführt wird.

5. Ein Verfahren zur Herstellung einer vernetzten Kautschukzusammensetzung, umfassend:
Mischen eines Füllstoffs in einen Copolymerkautschuk, der gemäß dem Verfahren nach einem der Ansprüche 1 bis 4 erhalten wurde, und
Vernetzen des Copolymerkautschuks durch Vulkanisation, um die Kautschukzusammensetzung zu erhalten.

6. Ein Copolymerkautschuk, umfassend:
eine multifunktionelle vinylaromatische Copolymerstruktureinheit (A1); und
entweder eine Struktureinheit einer konjugierten Dienverbindung (B1) oder eine Kombination aus der Struktureinheit einer konjugierten Dienverbindung (B1) und einer Struktureinheit einer aromatischen Vinylverbindung (C1),
wobei der Copolymerkautschuk 0,001 Gew.-% bis 6 Gew.-% der Struktureinheit (A1), 29 Gew.-% bis 99,999 Gew.-% der Struktureinheit (B1), und 0 Gew.-% bis 70 Gew.-% der Struktureinheit (C1) enthält, wobei
das multifunktionelle vinylaromatische Copolymer (A1) eine Struktureinheit (a), die von einer aromatischen Divinylverbindung abgeleitet ist; eine Struktureinheit (b), die von einer aromatischen Monovinylverbindung abgeleitet ist; und eine Struktureinheit (d), die ein molekulares Ende darstellt, beinhaltet;
das multifunktionelle vinylaromatische Copolymer (A) mindestens 2 Mol-%, aber weniger als 95 Mol-% der Struktureinheit (a) beinhaltet;
die Struktureinheit (a) teilweise eine Vinylgruppen enthaltende Struktureinheit (a1) beinhaltet, dargestellt durch die folgende Formel: 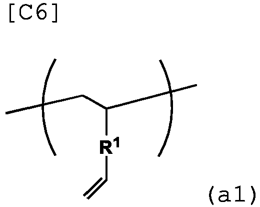 (wobei R¹ eine C₆ bis C₃₀ aromatische Kohlenwasserstoffgruppe bezeichnet), und
die Struktureinheit (a) teilweise als einen anderen Teil als die Vinylgruppen enthaltende Struktureinheit (a1) eine Struktureinheit beinhaltet, die die Struktureinheit (d) darstellt;
ein molare Anteil der Vinylgruppen enthaltenden Struktureinheit (a1) bezogen auf eine Summe der Struktureinheiten (a) und (b) in einem Bereich von 0,02 bis 0,8 liegt, und ein Zahlenmittel des Molekulargewichts der Struktureinheit (A1) in einem Bereich von 300 bis 100.000 liegt.

7. Der Copolymerkautschuk nach Anspruch 6, wobei
die Struktureinheit (A1) ein Zahlenmittel des Molekulargewichts in einem Bereich von 300 bis 100.000 aufweist.

8. Der Copolymerkautschuk nach Anspruch 6 oder 7, wobei
die Struktureinheit (d), die ein molekulares Ende darstellt, eine der durch (d1) bis (d6) dargestellten Einheiten ist (mit der Maßgabe, dass, wenn die Struktureinheit (d) durch (d4) oder (d5) dargestellte Einheiten sind, die Struktureinheit (d) beide durch (d4) und (d5) dargestellten Einheiten beinhaltet): 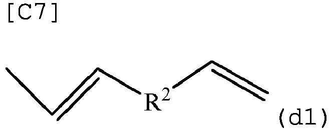
(wobei R² eine C₆ bis C₃₀ aromatische Kohlenwasserstoffgruppe bezeichnet), 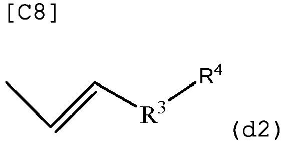
(wobei R³ eine C₆ bis C₃₀ aromatische Kohlenwasserstoffgruppe, und R⁴ ein Wasserstoffatom oder eine C₆- bis C₃₀-Kohlenwasserstoffgruppe bezeichnet),
-Y-O-Z (d3)
(wobei Y eine C₆ bis C₅₂ aromatische Kohlenwasserstoffgruppe ist, die unsubstituiert oder mit einer C₁- bis
C₁₂-Kohlenwasserstoffgruppe substituiert sein kann, und Z entweder eine aliphatische C₁- bis C₃₀-Kohlenwasserstoffgruppe oder eine C₆ bis C₅₂ aromatische Kohlenwasserstoffgruppe ist, die unsubstituiert oder mit einer C₁- bis C₁₂-Kohlenwasserstoffgruppe substituiert sein kann), 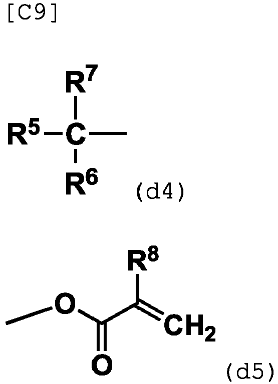
(wobei R⁵ ein Wasserstoffatom oder eine C₁- bis C₁₈-Kohlenwasserstoffgruppe, R⁶ und R⁷ jeweils unabhängig eine C₁- bis C₁₈-Kohlenwasserstoffgruppe, und R⁸ ein Wasserstoffatom oder eine Methylgruppe bezeichnen), 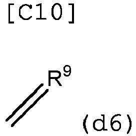
(wobei R⁹ eine C₄- bis C₁₆-Kohlenwasserstoffgruppe mit einem oder mehreren alicyclischen Kohlenwasserstoffringen bezeichnet).

9. Eine vernetzte Kautschukzusammensetzung, umfassend
den Copolymerkautschuk nach einem der Ansprüche 6 bis 8 und einen Füllstoff, und
wobei der Copolymerkautschuk eine vernetzte Struktur aufweist.

## Revendications

1. Procédé pour la production d'un caoutchouc de copolymère, comprenant une étape de copolymérisation de matières premières qui incluent un copolymère aromatique vinylique multifonctionnel (A) et un composé de diène conjugué (B), dans lequel :
le copolymère aromatique vinylique multifonctionnel (A) est utilisé à un rapport d'utilisation dans l'intervalle de 0,001 à 6 % en masse,
le copolymère aromatique vinylique multifonctionnel (A) inclut une unité de structure (a) dérivée d'un composé aromatique divinylique ; une unité de structure (b) dérivée d'un composé aromatique monovinylique ; et une unité de structure (d) constituant une extrémité moléculaire ;
le copolymère aromatique vinylique multifonctionnel (A) n'inclut pas moins de 2 % en mole mais moins de 95 % en mole de l'unité de structure (a) ;
l'unité de structure (a) inclut partiellement une unité de structure contenant un groupe vinyle (a1) représentée par la formule suivante : 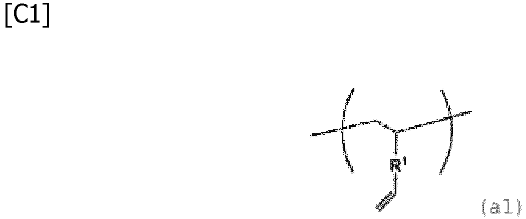 (où R¹ indique un groupe hydrocarboné aromatique en C₆ à C₃₀) ;
l'unité de structure (a) inclut partiellement, comme une partie différente de l'unité de structure contenant un groupe vinyle (a1), une unité de structure constituant l'unité de structure (d) ;
une fraction molaire de l'unité de structure contenant un groupe vinyle (a1) par rapport à une somme de l'unité de structure (a) et (b) se trouve dans un intervalle de 0,02 à 0,8, et
une masse moléculaire moyenne en nombre du composé aromatique vinylique multifonctionnel (A) se trouve dans un intervalle de 300 à 100 000 ; et
le copolymère aromatique vinylique multifonctionnel (A) est soluble dans un solvant.

2. Procédé pour la production d'un caoutchouc de copolymère selon la revendication 1, dans lequel :
le caoutchouc de copolymère est produit par copolymérisation des matières premières incluant le copolymère aromatique vinylique multifonctionnel (A), le composé de diène conjugué (B), et un composé vinylique aromatique (C).

3. Procédé pour la production d'un caoutchouc de copolymère selon la revendication 1 ou 2, dans lequel :
l'unité de structure (d) constituant une extrémité moléculaire est l'une quelconque d'unité représentée par (d1) à (d6) (à condition que lorsque l'unité de structure (d) est une unité représentée par (d4) ou (d5), l'unité de structure (d) inclut les deux unités représentées par (d4) et (d5)) : 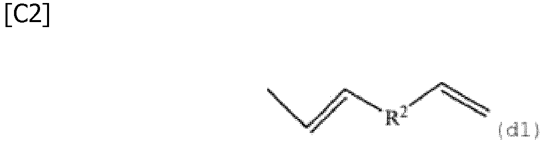
(où R² indique un groupe hydrocarboné aromatique en C₆ à C₃₀), 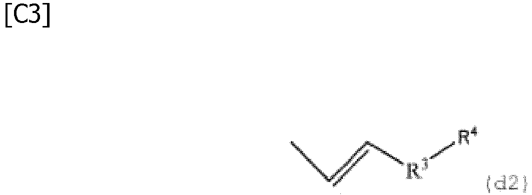
(où R³ indique un groupe hydrocarboné aromatique en C₆ à C₃₀, et R⁴ indique un atome d'hydrogène ou un groupe hydrocarboné en C₆ à C₃₀),
-Y-O-Z (d3)
(où Y est un groupe hydrocarboné aromatique en C₆ à C₅₂ qui peut être non substitué ou peut être substitué avec un groupe hydrocarboné en C₁ à C₁₂, et Z est soit un groupe hydrocarboné aliphatique en C₁ à C₃₀, soit un groupe hydrocarboné aromatique en C₆ à C₅₂ qui peut être non substitué ou peut être substitué avec un groupe hydrocarboné en C₁ à C₁₂), 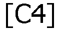 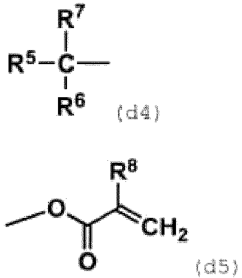
(où R⁵ indique un atome d'hydrogène ou un groupe hydrocarboné en C₁ à C₁₈, R⁶ et R⁷ représentent chacun indépendamment un groupe hydrocarboné en C₁ à C₁₈, et R⁸ indique un atome d'hydrogène ou un groupe méthyle), 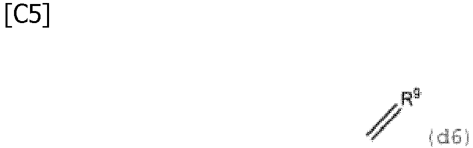
(où R⁹ indique un groupe hydrocarboné en C₄ à C₁₆ ayant un ou plusieurs cycles noyaux alicycliques).

4. Procédé pour la production d'un caoutchouc de copolymère selon l'une quelconque des revendications 1 à 3, dans lequel la copolymérisation est réalisée par polymérisation d'anion.

5. Procédé pour la production d'une composition de caoutchouc réticulé, comprenant :
le mélange d'une charge dans un caoutchouc de copolymère obtenu par le procédé selon l'une quelconque des revendications 1 à 4, et
la réticulation du caoutchouc de copolymère par vulcanisation afin d'obtenir la composition de caoutchouc.

6. Caoutchouc de copolymère, comprenant :
une unité de structure de copolymère aromatique vinylique multifonctionnel (A1) ; et
soit l'une d'une unité de structure de composé de diène conjugué (B1), soit une combinaison de l'unité de structure de composé de diène conjugué (B1) et d'une unité de structure de composé vinylique aromatique (C1),
le caoutchouc de copolymère contenant de 0,001 % en masse à 6 % en masse de l'unité de structure (A1), de 29 % en masse à 99,999 % en masse de l'unité de structure (B1), et de 0 % en masse à 70 % en masse de l'unité de structure (C1), dans lequel
le copolymère aromatique vinylique multifonctionnel (A1) inclut une unité de structure (a) dérivée d'un composé aromatique divinylique ; une unité de structure (b) dérivée d'un composé aromatique monovinylique ; et une unité de structure (d) constituant une extrémité moléculaire ;
le copolymère aromatique vinylique multifonctionnel (A) inclut pas moins de 2 % en mole mais moins de 95 % en mole de l'unité de structure (a) ;
l'unité de structure (a) inclut partiellement une unité de structure contenant un groupe vinyle (a1) représentée par la formule suivante : 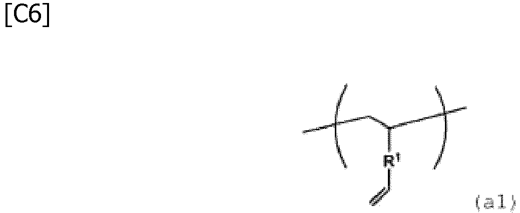 (où R¹ indique un groupe hydrocarboné aromatique en C₆ à C₃₀), et
l'unité de structure (a) inclut partiellement, comme une partie différente de l'unité de structure contenant un groupe vinyle (a1), une unité de structure constituant l'unité de structure (d) ;
une fraction molaire de l'unité de structure contenant un groupe vinyle (a1) par rapport à une somme des unités de structure (a) et (b) se trouve dans un intervalle de 0,02 à 0,8, et une masse moléculaire moyenne en nombre de l'unité de structure (A1) se trouve dans un intervalle de 300 à 100 000.

7. Caoutchouc de copolymère selon la revendication 6, dans lequel
l'unité de structure (A1) présente une masse moléculaire moyenne en nombre dans un intervalle de 300 à 100 000.

8. Caoutchouc de copolymère selon la revendication 6 ou 7, dans lequel
l'unité de structure (d) constituant une extrémité moléculaire est l'une quelconque d'unités représentées par (d1) à (d6) (à condition que lorsque l'unité de structure (d) est une unité représentée par (d4) ou (d5), l'unité de structure (d) inclut les deux unités représentées par (d4) et (d5)) : 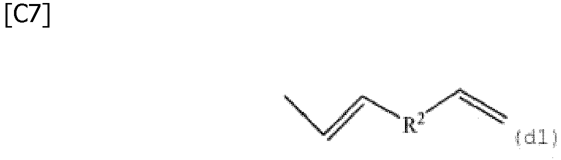
(où R² indique un groupe hydrocarboné aromatique en C₆ à C₃₀), 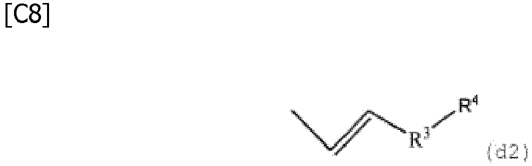
(où R³ indique un groupe hydrocarboné aromatique en C₆ à C₃₀, et R⁴ indique un atome d'hydrogène ou un groupe hydrocarboné en C₆ à C₃₀),
-Y-O-Z (d3)
(où Y est un groupe hydrocarboné aromatique en C₆ à C₅₂ qui peut être non substitué ou peut être substitué avec un groupe hydrocarboné en C₁ à C₁₂, et Z est soit un groupe hydrocarboné aliphatique en C₁ à C₃₀, soit un groupe hydrocarboné aromatique en C₆ à C₅₂ qui peut être non substitué ou peut être substitué avec un groupe hydrocarboné en C₁ à C₁₂), 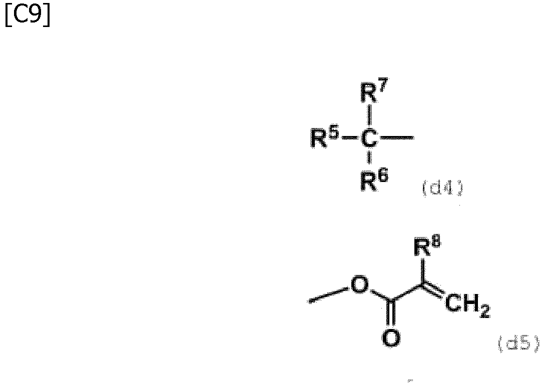
(où R⁵ indique un atome d'hydrogène ou un groupe hydrocarboné en C₁ à C₁₈, R⁶ et R⁷ indiquent chacun indépendamment un groupe hydrocarboné en C₁ à C₁₈, et R⁸ indique un atome d'hydrogène ou un groupe méthyle), 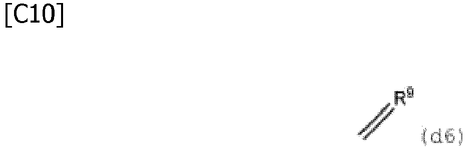
(où R⁹ indique un groupe hydrocarboné en C₄ à C₁₆ ayant un ou plusieurs noyaux hydrocarbonés alicycliques).

9. Composition de caoutchouc réticulé, comprenant :
le caoutchouc de copolymère selon l'une quelconque des revendications 6 à 8, et une charge, et
le caoutchouc de copolymère présente une structure réticulée.
